(19) Europäisches Patentamt / European Patent Office / Office européen des brevets

(11) **EP 2 579 009 A1**

(12) **DEMANDE DE BREVET EUROPEEN**

(43) Date de publication:
**10.04.2013 Bulletin 2013/15**

(21) Numéro de dépôt: **11184097.1**

(22) Date de dépôt: **06.10.2011**

(51) Int Cl.:
*G01J 1/44* (2006.01)     *G01J 1/46* (2006.01)
*G01J 5/22* (2006.01)     *G01J 5/24* (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(71) Demandeur: **ULIS**
**38113 Veurey Voroize (FR)**

(72) Inventeurs:
• **Dupont, Benoît**
**1030 Bruxelles (BE)**
• **Vilain, Michel**
**38450 Saint Georges de Commiers (FR)**

(74) Mandataire: **Vuillermoz, Bruno et al**
**Cabinet Laurent & Charras**
**"Le Contemporain"**
**50, Chemin de la Bruyère**
**69574 Dardilly Cédex (FR)**

(54) **Système et procédé de détection de rayonnement infrarouge**

(57) Un dispositif de détection d'un rayonnement infrarouge, comprend
■ une matrice (42) de bolomètres (12) pour la détection dudit rayonnement ; et
■ pour la lecture de chaque bolomètre (12), une circuiterie (14, 46) de formation de signal comportant :
o une circuiterie (14) apte à polariser le bolomètre sous une tension prédéterminé afin de faire circuler du courant dans celui-ci ;
o une circuiterie (20) apte à produire un courant de mode commun ; et
o une circuiterie (18) apte à intégrer la différence entre le courant circulant dans le bolomètre et le courant de mode commun,

Selon l'invention, le dispositif comprend une circuiterie (52) apte à injecter du courant dans chaque bolomètre pour décaler sa résistance d'une quantité prédéterminée dépendante de son offset, l'injection de courant étant réalisée préalablement à la polarisation de lecture du bolomètre et le décalage étant réalisé conformément au sens de variation de la résistance du bolomètre en fonction de la température. En outre, la circuiterie de correction (52) est apte à décaler les résistances des bolomètres (12) vers une valeur commune

Fig. 2

EP 2 579 009 A1

**Description**

**DOMAINE DE L'INVENTION**

La présente invention a trait au domaine de l'imagerie infrarouge et de la pyrométrie bolométrique. Plus particulièrement, l'invention s'applique au domaine des capteurs d'image à détection bolométrique, quelle que soit la bande de détection et le type de matériaux bolométrique utilisé.

**ETAT DE LA TECHNIQUE**

Les détecteurs destinés à l'imagerie infrarouge sont classiquement réalisés sous la forme d'une matrice de détecteurs élémentaires, ou bolomètres, selon une ou deux dimensions, lesdits bolomètres prenant la forme de membranes suspendues au dessus d'un substrat, généralement réalisé en silicium, via des bras de soutien de résistance thermique élevée.

Ces membranes comportent des moyens d'absorption du rayonnement infrarouge, et un matériau « sensible », c'est à dire dont un paramètre électrique varie avec la température. Dans le cadre de l'invention, ce matériau sensible est de type semiconducteur, et le paramètre est la résistivité électrique.

Il est usuellement ménagé dans le substrat des moyens d'adressage séquentiel des détecteurs élémentaires et des moyens d'excitation électrique et de pré-traitement des signaux électriques générés par ces bolomètres. Ce substrat et les moyens intégrés sont communément désignés par le terme « circuit de lecture ».

Pour obtenir une scène par l'intermédiaire de ce détecteur, on projette la scène à travers une optique adaptée sur la matrice de bolomètres, et des stimuli électriques cadencés sont appliqués par l'intermédiaire du circuit de lecture à chacun des bolomètres, ou à chaque rangée de tels bolomètres, afin d'obtenir un signal électrique constituant l'image de la température atteinte par chacun desdits détecteurs élémentaires. Ce signal est traité de manière plus ou moins élaborée par le circuit de lecture, puis éventuellement par un dispositif électronique extérieur au boîtier afin de générer l'image thermique de la scène observée.

Ce type de détecteur présente de nombreux avantages en termes de coût de fabrication et de mise en oeuvre, mais présente aussi des inconvénients qui limitent les performances des systèmes exploitant de tels détecteurs. Il se pose en particulier des problèmes d'uniformité de l'image obtenue. En effet, en face d'une scène uniforme, les bolomètres ne répondent pas tous exactement de la même manière, ce qui se traduit par un bruit spatial fixe sur l'image ainsi obtenue.

Les sources de cette dispersion sont nombreuses. En particulier, la dispersion technologique de résistance des bolomètres induit, entre autres défauts, une dispersion d'offset et de gain sur l'image, c'est-à-dire pour l'offset une dispersion spatiale des niveaux de sortie des bolomètres devant une image uniforme, et pour le gain, une dispersion de la variation absolue des niveaux de sortie des bolomètres devant une variation uniforme de la température de la scène.

Il existe ainsi de nombreuses méthodes de corrections d'offset. Un premier procédé pour corriger la dispersion d'offset est réalisé à l'aide de tables de correction d'offset, établies à la suite d'opérations de calibration en usine. Cependant, la stabilité de ces corrections dépend de la stabilité de la température du plan focal et donc, dans les applications non régulées en température (communément désignées par l'expression anglo-saxonne de « *TEC-less* »), il est nécessaire de recourir à l'acquisition et à la mémorisation de tables de gains et d'offset pour de multiples températures, dites de calibration, puis d'exploiter lesdites tables lors de l'utilisation du détecteur, par exemple par interpolation, pour assurer la continuité de la correction numérique sur toute la dynamique opérationnelle en termes de température du plan focal du détecteur. Ces tables acquises sur banc de calibration en usine induisent un coût conséquent pour les fabricants, en particulier en termes de matériel intégré dans le banc de calibration, et de temps d'acquisition de l'ensemble des tables de gains et d' offsets.

Un autre procédé, exposé par exemple dans le document US 2002/0022938, consiste à réaliser l'acquisition de l'image d'une scène uniforme de référence par la fermeture d'un obturateur mécanique. Une fois cette acquisition réalisée, l'obturateur est ouvert et l'image de référence mémorisée est ensuite soustraite numériquement ou analogiquement aux images courantes. Cette méthode est plus connue sous le nom de « correction shutter » ou « correction un point ». Elle présente l'avantage d'une grande efficacité de correction au voisinage de la température d'environnement du détecteur à laquelle a été réalisée l'acquisition de l'image de référence, et de ne nécessiter que peu de mémoire et de ressource en calcul.

En revanche, cette méthode nécessite l'emploi d'un obturateur mécanique, dispositif mécanique présentant un coût non négligeable, une fragilité relative en raison des pièces mobiles qu'il comprend et consommateur d'énergie. En outre, lorsque les conditions opérationnelles changent, et plus particulièrement l'environnement thermique du détecteur, les images acquises de la scène se dégradent en raison de la réapparition d'une dispersion d'offset, et il est alors nécessaire de réaliser une nouvelle acquisition d'une image de référence par la fermeture de l'obturateur mécanique. De fait, le détecteur est inutilisable au moins pendant la durée d'acquisition de l'image de référence.

Un autre procédé de correction de l'offset, par exemple exposé dans le document WO 98/47102, consiste à traiter numériquement une série d'images consécutives contenues dans une fenêtre temporelle glissante contenant suffisamment de trames pour en extraire une composante continue. La distribution spatiale de cette composante continue, qui est assimilée à la distribution d'offset, est ensuite retranchée numériquement aux images acquises courantes.

Cependant, sont ainsi supprimées, non seulement les dispersions d'offset proprement dites, mais également toutes les informations statiques de la scène. Il n'est certes pas besoin d'utiliser un obturateur mécanique, mais une telle correction d'offset n'est réellement acceptable que dans les cas où la scène est essentiellement variable ou mobile en permanence. En effet, tous les détails et contrastes locaux fixes sur une durée supérieure ou égale à la durée de la fenêtre glissante sont traités comme des non-uniformités et sont à ce titre corrigés, au même titre que le bruit spatial fixe.

De manière générale, les corrections d'offset de l'état de la technique ne sont appliquées qu'une fois l'image acquise et corrige donc les effets de la dispersion de l'offset dans celle-ci. Toutefois, si la dispersion d'offset impacte la qualité de l'image en tant que telle par la présence d'un bruit indépendant de la scène, elle a également des effets sur la dynamique de la scène observable que ne corrige pas ce type de techniques.

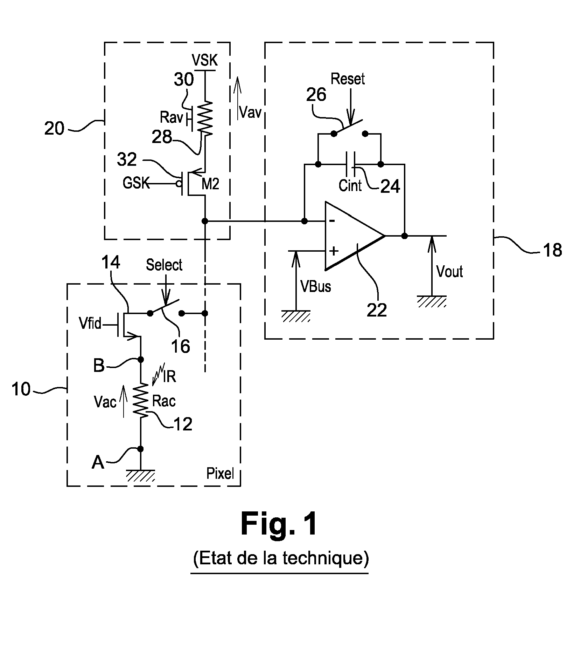

Pour comprendre ce phénomène, il est illustré sur la figure 1 un agencement élémentaire de détection et de lecture, tel qu'utilisé classiquement dans les détecteurs bolométriques matriciels.

Cet agencement élémentaire comporte :

- un point élémentaire d'image **10,** ou pixel, composé notamment d'un bolomètre d'imagerie **12** et des éléments **14** et **16** nécessaires à sa mise en oeuvre ;
- un circuit d'intégration **18** pour la lecture du bolomètre d'imagerie **12 ;** et
- un circuit de compensation **20** pour la compensation d'un courant de mode commun circulant dans le bolomètre d'imagerie **12** lors de la lecture de celui-ci.

Le bolomètre **12** est soumis à un rayonnement infrarouge IR issu d'une scène et est connecté à la masse par une première borne **A.**

Le circuit d'intégration **18** comprend :

- un amplificateur opérationnel **22,** dont l'entrée non inverseuse (+) est mise à une tension constante $VBUS$ prédéterminée ;
- un condensateur **24,** de capacité $C_{int}$ prédéterminée, connecté entre l'entrée inverseuse (-) de l'amplificateur **22** et la sortie de celui-ci ; et
- un interrupteur de remise à zéro **26** connecté en parallèle du condensateur **24** et pilotable au moyen d'un signal « Reset ».

Le point élémentaire d'image **10** comporte par ailleurs un interrupteur **16** de lecture, pilotable au moyen d'un signal « Select » et connecté à l'entrée inverseuse (-) de l'amplificateur opérationnel, et un premier transistor MOS **14** d'injection, dont la grille est piloté par une tension $VFID$ de manière à imposer une tension $Vac$ aux bornes du bolomètre **12,** dont la source est connectée à une seconde borne **B** du bolomètre **12,** et dont le drain est connecté à l'autre borne de l'interrupteur **16** de lecture.

Le circuit de compensation **20** du courant de mode commun traversant le bolomètre d'imagerie **12** comprend un bolomètre résistif de compensation **28** réalisé dans le même matériau que le bolomètre d'imagerie **12.** Le bolomètre de compensation **28** est essentiellement insensible au rayonnement issu de la scène, par exemple en ce qu'il présente une faible résistance thermique vers le substrat, et est pourvu, de manière optionnelle ou alternative, d'un écran opaque **30.**

Le bolomètre de compensation **28** est connecté à l'une de ses bornes à une tension prédéterminée $VSK$ et à l'autre de ses bornes, à la source d'un second transistor MOS d'injection **32** du circuit **20.** Le drain du transistor d'injection **32** est connecté à l'entrée inverseuse (-) de l'amplificateur opérationnel **22** et sa grille est connectée à une tension prédéterminée $GSK$.

Pour la lecture du bolomètre **12,** une fois le condensateur **24** déchargé par la fermeture de l'interrupteur de remise à zéro **26,** les bolomètres d'imagerie et de compensation **12, 28** sont polarisés par la commande en tension des transistors de polarisation **14, 32** et la différence entre le courant $Iac$ circulant dans le bolomètres d'imagerie **12** et le courant $Iav$ circulant dans le bolomètre de compensation **28** est intégré par le circuit d'intégration **18** pendant une durée prédéterminée d'intégration $Tint.$ Comme cela est connu en soi, l'utilisation du circuit de compensation **20** est justifiée par le fait que le courant utile, c'est-à-dire représentatif de la température de la scène, ne représente qu'une infime partie, généralement de l'ordre de 1%, du courant total circulant dans le bolomètre d'imagerie **12,** d'où la nécessité d'éliminer le courant de mode commun avant intégration.

La tension $Vout$ en sortie de l'intégrateur **18** est alors donnée par l'expression :

$$Vout = VBUS + \frac{1}{C_{int}} \int_0^{T\,int} (Iac(t) - Iav(t))dt \qquad (1)$$

L'intégration par le circuit **18** permet ainsi d'apporter, via la valeur de la capacité $C_{int}$, un gain sur la lecture du signal utile tout en assurant la conversion du courant utile en une tension qui est plus simplement manipulable. L'ensemble des bolomètres d'imagerie du détecteur matriciel est ainsi lu de la même manière, notamment en appliquant le même niveau de polarisation.

L'agencement et le fonctionnement des éléments venant d'être décrits est classique et ne seront donc pas expliqués plus en détail pour des raisons de concision. Pour de plus amples détails, on pourra par exemple se référer au document « Uncooled amorphous silicon enhancement for 25$\mu$m pixel pitch achievement » de E. Mottin et al, Infrared Technology and Application XXVIII, SPIE, vol. 4820.

En admettant par exemple que la dispersion spatiale relative de résistance des bolomètres d'imagerie du détecteur est égale à 1%, conduisant pour de faibles niveaux de polarisation à 1% de dispersion sur les courants *Iac,* et que la polarisation des bolomètres de compensation est choisie de telle sorte que le courant *Iav* soit environ égal à 90% du courant *Iac,* la dispersion spatiale des tensions *Vout* après la lecture de l'ensemble des bolomètres est d'environ 10%. Cette dispersion représente dans les détecteurs classiques environ 300mV de la dynamique de sortie. Si la polarisation des bolomètres d'imagerie est en outre augmentée par exemple de 50% pour augmenter la valeur des niveaux de sortie et donc la sensibilité du détecteur, la dispersion des tensions de sortie *Vout* augmente aussi de 50%, et atteint alors 450mV. Considérant que la dynamique totale disponible est habituellement limitée à 2 ou 3V, une part conséquente de cette dynamique est donc déjà consommée par la simple dispersion naturelle des bolomètres.

Ainsi, la dispersion de l'offset occupe par sa simple existence une partie de la dynamique de sortie du détecteur. On désigne usuellement par « dynamique résiduelle » ou « dynamique de scène » la différence entre l'amplitude maximale de la tension *Vout* sans saturation des circuits d'intégration et l'amplitude maximale des tensions de sortie *Vout* devant une scène uniforme, c'est-à-dire la dynamique restante au signal utile.

Outre une dynamique résiduelle inférieure à la dynamique électrique des circuits d'intégration par la simple présence de la dispersion d'offset, cette dynamique résiduelle est d'autant plus faible que la sensibilité souhaitée par l'utilisateur augmente.

Par ailleurs, lors de la polarisation des bolomètres d'imagerie, ces derniers subissent un échauffement par effet joule résultant en une amplification accrue de la dispersion des courants les traversant et donc des tensions de sortie, d'où une dynamique résiduelle amoindrie. Un phénomène similaire se produit également lors de l'augmentation de la température du plan focal sur lequel est positionnée la matrice de bolomètres. De fait du coefficient thermique de résistivité négatif pour les matériaux bolométriques usuels, il en résulte que la dispersion des niveaux de sortie des bolomètres augmente rapidement, diminuant en cela de manière conséquente la dynamique résiduelle.

On notera ainsi que les corrections de dispersion de l'offset de l'état de la technique ne traitent en rien la réduction de la dynamique résiduelle, se contentant de corriger a *posteriori* les effets de ladite dispersion sur les images déjà formées.

**EXPOSE DE L'INVENTION**

Le but de la présente invention est de proposer un procédé et un dispositif de détection bolométrique qui corrigent l'effet de la dispersion de l'offset à la fois sur les images formées et sur la dynamique résiduelle.

A cet effet, l'invention a pour objet un dispositif de détection d'un rayonnement infrarouge, comprenant

■ une matrice de bolomètres pour la détection dudit rayonnement comprenant chacun une membrane bolométrique comportant un matériau sensible de type semi-conducteur suspendue au dessus d'un substrat ; et
■ pour la lecture de chaque bolomètre, une circuiterie de formation de signal comportant :

o une circuiterie de polarisation de lecture apte à polariser le bolomètre sous une tension prédéterminé afin de faire circuler du courant dans celui-ci ;
o une circuiterie de rej ection de mode commun apte à produire un courant de mode commun ; et
o une circuiterie d'intégration apte à intégrer la différence entre le courant circulant dans le bolomètre et le courant de mode commun.

Selon l'invention :

■ le système comprend une circuiterie de correction de la résistance des bolomètres apte à injecter du courant dans chaque bolomètre pour décaler sa résistance d'une quantité prédéterminée dépendante de son offset, l'injection de courant étant réalisée préalablement à la polarisation de lecture du bolomètre et le décalage étant réalisé conformément au sens de variation de la résistance du bolomètre en fonction de la température ;

■ la circuiterie de correction comprend des moyens de chronométrage, aptes à stopper l'injection de courant après une durée prédéterminée en fonction de la quantité dépendante de l'offset ; et

■ les moyens de chronométrage sont aptes à stopper l'injection de courant après une durée selon la relation :

$$t(i, j) = \frac{k.TPF^2.C_{th}}{E_A.V_{ac}^2}.\Delta R_0(i, j)$$

où $t(i, j)$ est la durée prédéterminée, $\Delta R_0(i, j)$ est la quantité dépendante de l'offset, $k$ est la constante de Boltzmann, TPF est la température du substrat, $C_{th}$ est la capacité calorifique du bolomètre, $E_A$ est l'énergie d'activation thermique de conductivité du matériau bolométrique constitutif du bolomètre, et $V_{ac}$ est la tension aux bornes du bolomètre.

En d'autres termes, le circuit de commande de la résistance des bolomètres selon l'invention modifie individuellement la valeur des résistances des bolomètres, de manière à rendre celle-ci plus faible si la résistance du bolomètre diminue en fonction de la température ou plus élevée dans le cas contraire. De préférence, les résistances des divers bolomètres sont modifiées de manière à être rendues sensiblement identiques entre elles. Cette correction est réalisée en amont de la lecture, c'est-à-dire avant la polarisation des bolomètres et l'intégration des courants. Cette modification des résistances est obtenue par effet Joule à l'aide de moyens électriques lors d'une phase précédant la phase d'intégration, sans altération de l'information thermique issue de la scène observée. Selon des modes de réalisation particuliers de l'invention, le dispositif comporte une ou plusieurs des caractéristiques suivantes.

La circuiterie de correction est apte à décaler les résistances des bolomètres vers une valeur commune.

La circuiterie de correction comprend des moyens de chronométrage, aptes à stopper l'injection de courant après une durée déterminée en fonction de la quantité dépendante de l'offset.

La matrice de bolomètres est lue ligne par ligne, et la circuiterie de correction comprend une circuiterie de commande de résistance agencée en bout de chaque colonne de la matrice de bolomètres et apte à être connectée à chaque bolomètre de la colonne pour commander la résistance de celui-ci.

L'invention permet ainsi d'augmenter la sensibilité du détecteur en augmentant la dynamique résiduelle, et donc de diminuer l'importance de la dispersion des offsets dans les images formées, et/ou d'utiliser le dispositif à des températures plus élevées. Plus généralement, le produit de la sensibilité par la dynamique résiduelle est sensiblement augmenté.

L'invention a également pour objet un procédé de détection d'un rayonnement infrarouge à l'aide d'une matrice de bolomètres, le procédé comportant, pour la lecture d'un bolomètre :

■ la polarisation du bolomètre sous une tension prédéterminée afin de faire circuler du courant dans celui-ci ;

■ la soustraction d'un courant de mode commun du courant circulant dans le bolomètre ; et

■ l'intégration de la différence entre le courant circulant dans le bolomètre et le courant de mode commun.

Selon l'invention :

■ le procédé comporte, préalablement à la lecture du bolomètre, l'injection d'un courant dans celui-ci de manière à décaler la résistance du bolomètre d'une quantité prédéterminée dépendante de l'offset de celui-ci conformément au sens de variation de la résistance du bolomètre en fonction de la température ;

■ et en outre, l'injection du courant dans chaque bolomètre est appliquée pendant une durée prédéterminée selon la relation :

$$t(i, j) = \frac{k.TPF^2.C_{th}}{E_A.V_{ac}^2}.\Delta R_0(i, j)$$

où $t(i, j)$ est la durée prédéterminée, $\Delta R_o(i, j)$ est la quantité dépendante de l'offset du bolomètre, $k$ est la constante de Boltzmann, $TPF$ est la température du substrat, $C_{th}$ est la capacité calorifique du bolomètre, $E_A$ est l'énergie d'activation thermique de conductivité du matériau bolométrique constitutif du bolomètre, et $V_{ac}$ est la tension de polarisation aux bornes du bolomètre.

Selon un mode de réalisation particulier de l'invention, les valeurs prédéterminées dépendantes des offsets associées aux bolomètres sont déterminées :

■ en exposant la matrice à une scène uniforme ;
■ en déterminant les résistances correspondantes des bolomètres ; et
■ en retranchant desdites résistances :

o une quantité sensiblement égale à la plus petite des résistances déterminées dans le cas de bolomètres à coefficient de résistance négatif ; ou
o en retranchant desdites résistances une quantité sensiblement égale à la plus grande des résistances déterminées dans le cas de bolomètres à coefficient de résistance négatif.

**BREVE DESCRIPTION DES FIGURES**

L'invention sera mieux comprise à la lecture de la description qui va suivre, donnée uniquement à titre d'exemple, et réalisée en relation avec les dessins annexés, dans lesquels des références identiques désignent des éléments identiques ou analogues, et dans lesquels :

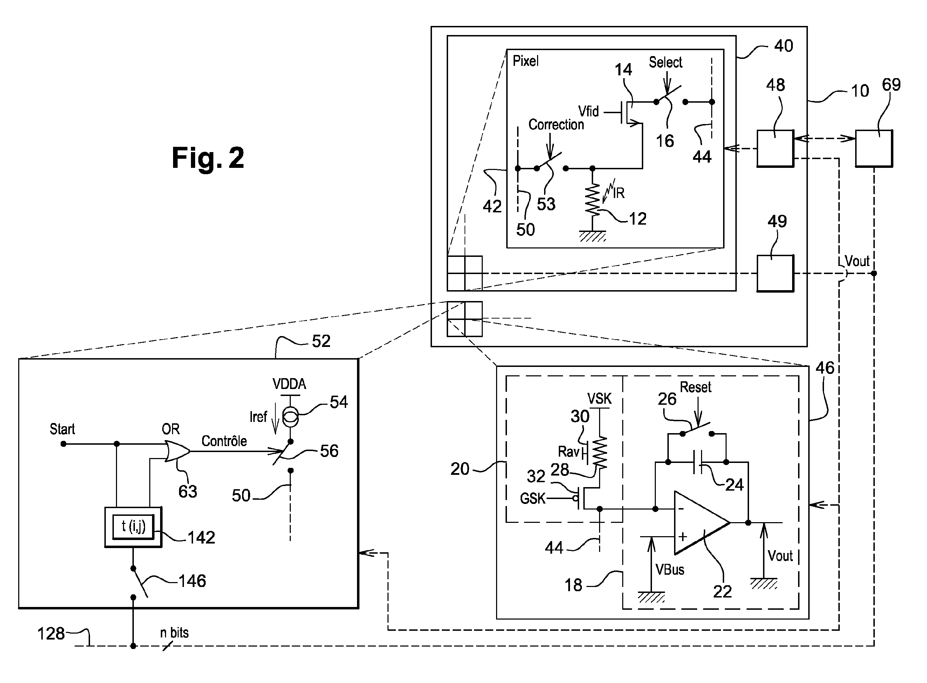

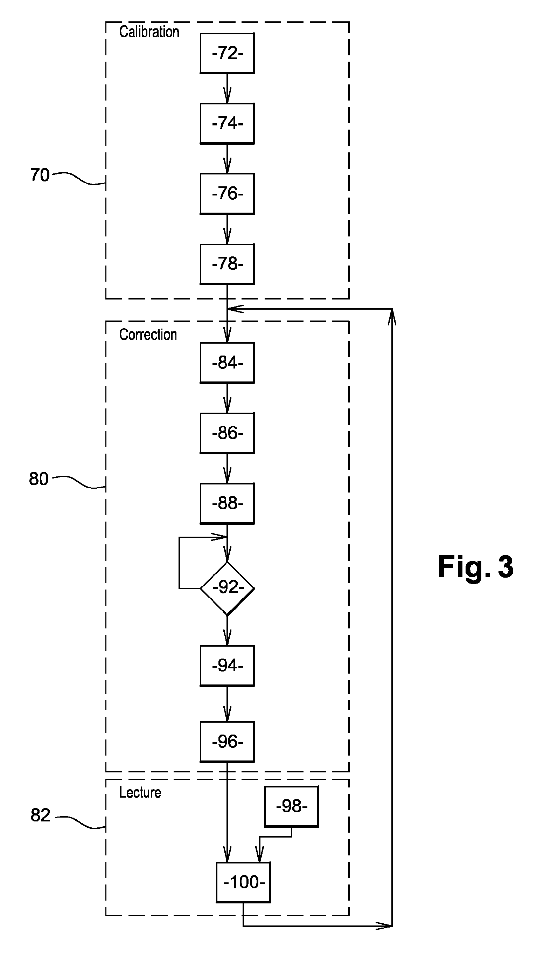

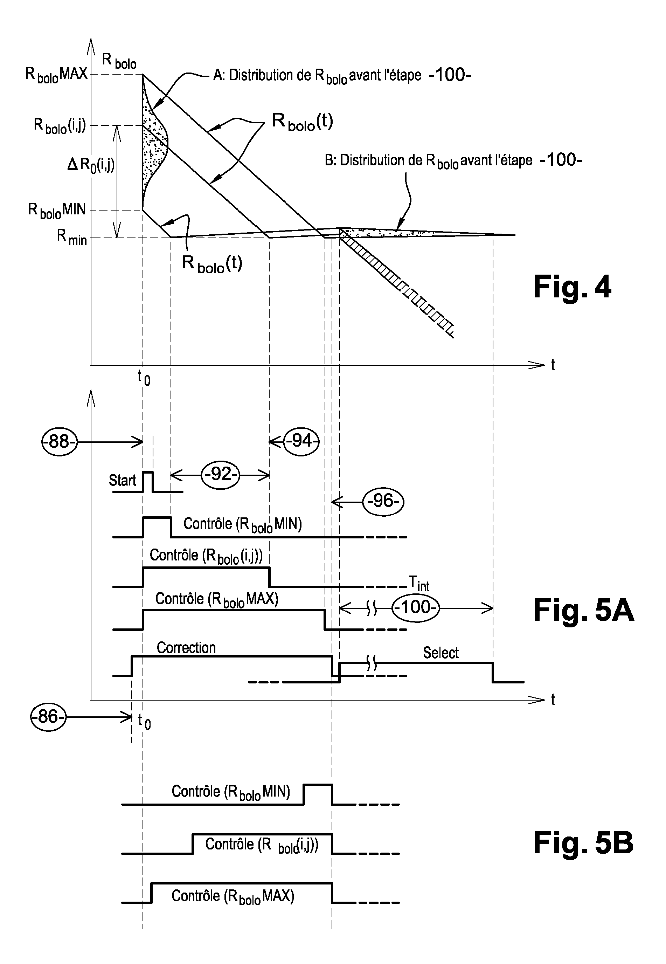

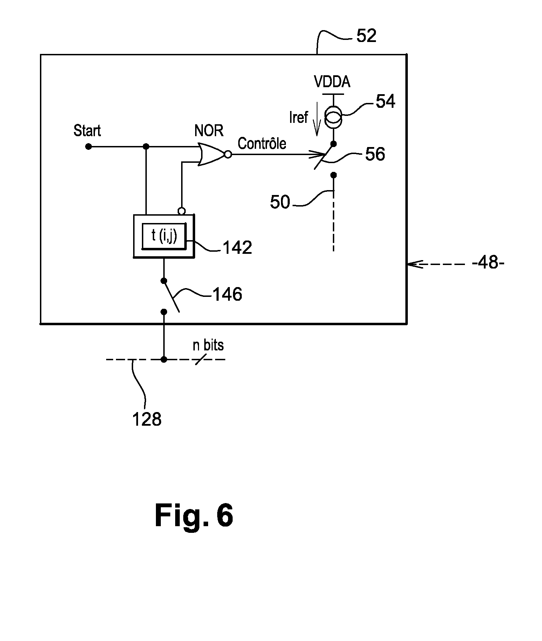

■ la figure 1 est une vue schématique d'un agencement élémentaire de détection et de lecture tel qu'utilisé classiquement dans les détecteurs bolométriques matriciels. Cet agencement a déjà été décrit précédemment ;
■ la figure 2 est une vue schématique d'un premier mode de réalisation d'un dispositif de détection bolométrique matricielle selon l'invention ;
■ la figure 3 est un organigramme d'un procédé de correction de dispersion de l'offset des bolomètres selon l'invention ;
■ la figure 4 est un diagramme explicatif de l'évolution des résistances en fonction du temps consécutive à l'application de l'invention ;
■ les figures 5A et 5B sont des chronogrammes de différents signaux de commande d'interrupteurs produits lors de la mise en oeuvre du procédé selon l'invention ;
■ les figures 6 est une vue schématique d'un second mode de réalisation du dispositif de contrôle en fonction du temps.

**DESCRIPTION DETAILLEE DE L'INVENTION**

Un détecteur bolométrique selon l'invention est illustré schématiquement à la figure 2. Ce détecteur comporte une matrice **40** d'éléments unitaires de détection **42,** ou « pixels », de $\underline{N}$ lignes et $\underline{M}$ colonnes, chacun des pixels comportant un bolomètre d'imagerie **12,** un transistor MOS **14** et un interrupteur de lecture **16.**

Chaque colonne de la matrice **40** est associée, via un bus colonne de lecture **44,** à une circuiterie de lecture **46,** qui comporte un intégrateur **18,** formé d'un amplificateur opérationnel **22,** d'un condensateur **24** et d'un interrupteur de remise à zéro **26,** ainsi qu'un circuit de compensation **20,** formé d'un bolomètre résistif de compensation **28** essentiellement insensible au rayonnement, par exemple par thermalisation au substrat ou/et au moyen d'un écran opaque **30,** et d'un transistor MOS d'injection **32.**

Chaque pixel **42** de la matrice **40** forme avec sa circuiterie de lecture **46** associée un agencement élémentaire analogue à celui décrit en relation avec la figure 1. Tous les éléments bolométriques **12, 28** sont formés en surface d'un substrat **10** dans lequel sont formés tous les éléments électroniques. La zone optiquement active **40** est placée au foyer d'une optique (non représentée) adéquate.

Comme cela est connu en soi, les bolomètres **12** de la matrice **40** sont lus ligne par ligne, la ligne de pixels en cours de lecture étant connectée aux circuiteries de lecture **46** par la fermeture des interrupteurs de lecture **16.** Comme il est usuel en la matière, après établissement des tensions *Vout* en sortie des intégrateurs **18** à la fin d'une lecture ligne, les signaux *Vout* sont échantillonnés - bloqués (Sample and Hold en anglais) avant adressage de la ligne suivante, puis multiplexés vers l'amplificateur de sortie **49,** Le cadencement de la lecture est usuellement assuré par un circuit de cadencement **48** aménagé dans le substrat **10** et en charge de l'ouverture et de la fermeture des interrupteurs de lecture **16** et de remise à zéro **26.** On se reportera par exemple à l'article précédemment mentionné pour plus de détails sur le fonctionnement de la lecture.

Selon l'invention, chaque colonne de la matrice **40** est également associée, via un bus colonne de correction **50,** à une circuiterie **52** de commande de la résistance des bolomètres de ladite colonne. La circuiterie **52** a pour fonction de corriger l'effet de la dispersion de l'offset des bolomètres **12** sur les images formées ainsi que l'effet de cette dispersion sur la dynamique résiduelle du détecteur. La connexion et la déconnexion d'un pixel **42** d'une colonne à sa circuiterie de commande **52** est assurée par un interrupteur de correction **53,** agencé dans le pixel **42** entre le bus de correction **50** et le bolomètre **12** et piloté par la circuiterie de cadencement **48,** d'une manière expliquée plus en détail par la suite.

La circuiterie de commande **52** comporte :

■ une source de courant **54** débitant un courant constant prédéterminé *Iref* et connectée à l'une de ses bornes à une tension constante *VDDA* ;
■ un premier interrupteur pilotable **56,** connecté entre l'autre borne de la source de courant **54** et le bus colonne de correction **50** ;
■ une cellule logique OR **62** dont une entrée est piloté au moyen d'un signal « Start » par la circuiterie de cadencement **48** ;
■ un compteur de temps **142** programmable pilotant l'autre entrée de la cellule OR **63** ; et
■ un interrupteur **146** connectant le compteur de temps **142** à un bus à multiplexage numérique sur n bits **128** piloté par l'unité de gestion **69.**

Enfin, le détecteur selon l'invention comporte une unité de gestion de la correction **69,** typiquement (mais non nécessairement) extérieure au substrat **10.** L'unité de gestion **69** mémorise notamment les paramètres de la correction des résistances des bolomètres d'imagerie **12** et met en oeuvre le calibrage desdits paramètres, comme cela sera expliqué plus en détails ci-dessous.

L'unité **69** est par exemple l'unité de traitement numérique classiquement prévue dans les détecteurs de l'état de la technique. Les détecteurs sont en effet d'une part soit pourvus d'une sortie numérique (conversion analogique - digital ou ADC en anglais) des signaux *Vout* formée dans le substrat **10** après l'amplificateur **49,** soit déportée dans des éléments électroniques externes, et sont d'autre part associés à une unité de traitement numérique qui comporte les mémoires et algorithmes de correction, par exemple d'offset et de gain pour les traditionnelles « corrections 2 points » nécessaires à la mise en oeuvre ordinaire du détecteur. Ladite unité de traitement numérique est réputée par la suite comporter, selon l'usage du domaine, lesdits moyens de stockage en mémoire et de traitement des données numériques évoqués pour la mise en oeuvre de l'invention.

Une valeur de la durée *t(i,j)* est pré-programmée sur n bits dans le compteur **142,** qui comporte par exemple un registre à n bits, en fonction du pixel **12** auquel le circuit de commande **52** est connecté. Notamment, une valeur numérique de la durée *t(i,j)* est d'abord produite sur le bus **128** par l'unité de gestion **69** associée au détecteur, puis l'interrupteur **126** est fermé. La valeur numérique sur le bus **128** est alors mémorisée dans le compteur **142.** Une fois la mémorisation dans le compteur **142** terminée, l'interrupteur **146** est ouvert laissant le bus **128** libre d'être utilisé pour le réglage de la durée d'une autre circuiterie de commande **52.** Une fois tous les compteurs **142** de la ligne de circuits **52** programmés, lesdits circuits sont prêts à une mise en oeuvre selon l'invention, puis le processus est relancé lors du chargement des données numériques relatives à la production des durées *t(i,j)* nécessaires à la lecture de la ligne suivante.

Il va maintenant être décrit en relation avec l'organigramme de la figure 3 un procédé de correction des effets des offsets mis en oeuvre par le détecteur venant d'être décrit. Ce procédé repose sur la propriété de variation rapide des résistances des bolomètres lorsque ceux-ci sont parcourus par un courant (phénomène d'auto-échauffement par effet Joule). Un courant est ainsi injecté dans les bolomètres d'imagerie **12** de manière à corriger individuellement leur résistance avant et au plus près de la phase d'intégration.

Plus particulièrement, et sans que cela revête un caractère limitatif pour l'invention, le procédé qui suit s'applique à un détecteur bolométrique régulé en température, par exemple au moyen de modules à effet Peltier (TEC pour « *Thermo-Electric Cooler* » en anglais), dont les bolomètres d'imagerie **12** présentent un coefficient de résistance négatif, c'est-à-dire voient leur résistance diminuer à mesure que leur température augmente. Les bolomètres **12,** prenant par exemple la forme de membranes suspendues au dessus d'un substrat, sont du type semi-conducteur, leur matériau sensible aux variations de température étant par exemple du silicium amorphe (a-Si) ou un oxyde de vanadium génériquement désigné par la notation « VOx ».

Le procédé selon l'invention débute par une phase de calibrage **70** réalisée par exemple en usine et/ou sur une base régulière pour tenir compte des dérives du détecteur au cours du temps.

Cette phase de calibrage **70** comporte une première étape **72** d'exposition du détecteur à une scène uniforme pour une température *TPF* du plan focal donnée et constante. A cet effet, le détecteur est disposé par exemple devant un corps noir de référence ou bien, le cas échéant, l'obturateur mécanique du détecteur est fermé. La température *TPF* est celle à laquelle le détecteur est régulé lors de son utilisation. On notera par ailleurs que le substrat dans lequel sont formés les circuiteries de lecture **46** et de commande **52,** et au dessus duquel sont formées les membranes bolométriques, étant agencé dans le plan focal d'une optique, on désignera indifféremment cette température de température « du plan focal » ou de température « du substrat ».

La matrice **40** des bolomètres **12** est alors lue ligne par ligne lors d'une étape **74,** chaque ligne étant successivement connectée aux circuiteries **46** de lecture agencées en bout de colonne par la fermeture des interrupteurs de lecture **16** qui provoque la polarisation des bolomètres d'imagerie **12**. La connexion d'une ligne aux circuiterie **46** est précédée de la décharge des condensateurs **24** par la fermeture des interrupteurs de remise à zéro **26**, suivi de l'ouverture de ceux-ci. Lors de cette étape **74**, les transistors **32** des circuiteries de compensation **20** sont forcés à l'état bloqué de manière à annuler les courants de mode commun, et les bolomètres d'imagerie **12** sont polarisés sous une faible tension de manière à ne pas saturer les condensateurs **24** des intégrateurs **18**.

Les tensions *Vout* en sortie des intégrateurs **18**, résultant de l'intégration des courants circulants dans les bolomètres d'imagerie **12**, sont alors analysées par l'unité de gestion **69** pour déterminer les résistances correspondantes des bolomètres **12** de la matrice **40**, d'une manière connue en soi de l'état de la technique.

A l'issue de l'étape **74** de lecture, il est donc obtenu, pour la température du plan focal *TPF*, une table $R_{ac}$ de valeurs de résistances $R_{ac}(i,j)$ correspondant aux bolomètres **12** de la matrice **40** du détecteur selon la notation tabulaire :

$$R_{ac} = \begin{pmatrix} R_{ac}(1,1) & R_{ac}(1,2) & \cdots & R_{ac}(1,M) \\ R_{ac}(2,1) & R_{ac}(2,2) & \cdots & R_{ac}(2,M) \\ \vdots & \vdots & \ddots & \vdots \\ R_{ac}(N,1) & R_{ac}(N,2) & \cdots & R_{ac}(N,M) \end{pmatrix} \quad (2)$$

Cette table est alors mémorisée dans l'unité de gestion **69**.

La phase de calibration **70** se poursuit alors par la détermination, au moyen de l'unité de gestion **69**, en **76**, d'une quantité de correction de résistance pour chacun des bolomètres d'imagerie **12**.

Plus particulièrement, la plus petite des résistances mesurées $R_{ac}^{\min}$ de la matrice $R_{ac}$ est déterminée et une résistance de référence $R_{min}$ est déterminée égale ou de préférence légèrement inférieure à la résistance $R_{ac}^{\min}$. La résistance $R_{min}$ est la résistance cible de la correction selon l'invention sur laquelle les résistances des bolomètres d'imagerie **12** seront réglées avant leur polarisation de lecture, dans le cas particulier où le détecteur est replacé dans les mêmes conditions d'éclairement thermique uniforme que lors de la phase de calibration **70**. Dans le cas général d'observation d'une scène quelconque, les mêmes corrections individuelles de résistances seront appliquées, selon le même procédé. Le résultat est l'élimination des dispersions de résistances indépendantes de la scène, comme cela sera expliqué également plus en détail par la suite.

Il est ainsi obtenu lors de l'étape **76** une table $\Delta R_0$ de quantités individuelles de correction $\Delta R_0(i, j)$ des résistances des bolomètres **12** selon la relation tabulée :

$$\Delta R_0 = \begin{pmatrix} \Delta R_0(1,1) & \Delta R_0(1,2) & \cdots & \Delta R_0(1,M) \\ \Delta R_0(2,1) & \Delta R_0(2,2) & \cdots & \Delta R_0(2,M) \\ \vdots & \vdots & \ddots & \vdots \\ \Delta R_0(N,1) & \Delta R_0(N,2) & \cdots & \Delta R_0(N,M) \end{pmatrix}$$
$$= \begin{pmatrix} R_{ac}(1,1)-R_{min} & R_{ac}(1,2)-R_{min} & \cdots & R_{ac}(1,M)-R_{min} \\ R_{ac}(2,1)-R_{min} & R_{ac}(2,2)-R_{min} & \cdots & R_{ac}(2,M)-R_{min} \\ \vdots & \vdots & \ddots & \vdots \\ R_{ac}(N,1)-R_{min} & R_{ac}(N,2)-R_{min} & \cdots & R_{ac}(N,M)-R_{min} \end{pmatrix} \quad (3)$$

La phase de calibration **70** se termine alors par la mémorisation de la matrice $\Delta R_0$ par l'unité de gestion **69**.

Les phases suivantes du procédé sont mises en oeuvre lors de l'emploi du détecteur par un utilisateur. Les explications qui suivent seront bien comprises en relation avec les figures 4, 5A et 5B.

La figure 4 illustre l'évolution temporelle des résistances d'une même ligne lors de la mise en oeuvre de l'invention. Pour des raisons de clarté de l'exposé, cette évolution correspond à l'exposition du détecteur à une scène uniforme et il est supposé que la distribution des résistances ne contient que les contributions d'ordre technologique et de distribution thermique du substrat, c'est-à dire équivalentes aux conditions de la phase 70 de calibration. Bien entendu, pour la mise en oeuvre ordinaire devant une scène quelconque, qui représente le point d'intérêt de l'invention, il sera commenté ce qu'il advient de la population des résistances. La figure 5A illustre quant à elle les signaux de commande des différents interrupteurs, produits lors de la mise en oeuvre d'un premier mode de réalisation du procédé selon l'invention par le système de la figure 2.

Lors de l'utilisation du détecteur, une phase de correction **80** des résistances des bolomètres **12** d'une ligne de la matrice **40** est réalisée avant, et au plus près temporellement, de la phase de lecture **82** de ladite ligne.

Plus particulièrement, la phase de correction **80** d'une ligne de la matrice **50** débute en **84** par le réglage de chacune des durées *t(i,j)* des circuiteries **52** de commande. La durée *t(i,j)* d'une circuiterie **52** est alors réglée sur une valeur individuelle relative au pixel **12** de la colonne associée à la circuiterie **52,** comme cela sera expliqué plus en détail ci-après.

Une fois les durées *t(i,j)* réglées sur les valeurs individuelles, la phase de correction **80** se poursuit, en **86,** par la fermeture des interrupteurs de correction **53** de la ligne de pixels, les interrupteurs de sélection **16** de ceux-ci restant par ailleurs ouverts.

Dans une étape **88** suivante, les interrupteurs **56** connectés aux sources de courant **54** sont alors fermés par une brève impulsion « Start » fournie par le séquenceur **48.** L'impulsion « Start » est en effet fournie à la porte OR **63,** et le décompte du temps est parallèlement déclenché par la commande « Start » sur le compteur **142,** lequel confirme l'état haut du signal « Contrôle » au travers de la cellule OR lorsque l'impulsion « Start » repasse à l'état bas. Un courant de valeur *Iref* constante circule donc dans les bolomètres **12.** Dans ce qui suit la fermeture des interrupteurs **56** marque l'origine des temps « 0 ».

On n'utilise pas dans cette phase la notation $R_{ac}$, dans le but de différencier les valeurs des résistances lors de la calibration ($R_{ac}$) des valeurs des résistances $(R_{bolo})$ en situation d'utilisation, en général différentes puisque dépendantes de l'élément de scène observé par chaque élément sensible. Pour la clarté de la figure 4 cependant, la notation $R_{bolo}$ est utilisée en conformité avec la situation d'utilisation du détecteur, mais la distribution des résistances est délibérément choisie comme identique à ce que produit la situation de calibration, on a dans ce cas particulier délibéré $R_{bolo} = R_{ac}$.

On notera que l'auto-échauffement par effet Joule d'un bolomètre **12** à coefficient de résistance négatif induit une diminution de sa résistance $R_{bolo}$. En effet, comme cela est connu en soi, on montre que la résistance $R_{bolo}$ d'un tel bolomètre suit une loi en température selon la relation :

$$R_{bolo} = R_{abs}.\exp\left(\frac{E_A}{k.T}\right) \qquad (4)$$

où :

- ■ $R_{abs}$ est une résistance absolue du bolomètre dont la valeur dépend de paramètres technologiques ;
- ■ $E_A$ est l'énergie d'activation thermique de la conductivité du matériau bolométrique ;
- ■ k est la constante de Boltzmann ; et
- ■ T est la température absolue du bolomètre exprimée en degré Kelvin.

Ainsi, à mesure que la température T du bolomètre augmente par effet Joule, la résistance électrique $R_{bolo}$ de celui-ci diminue. La figure 4 schématise cette diminution, linéaire par approximation au premier ordre. On notera par ailleurs que dans le cas où le courant *Iref* injecté est comparable au courant de polarisation mis en oeuvre lors de l'intégration, les pentes dR/dt des deux segments sont comparables lors des phases de correction et d'intégration, comme cela est illustré à la figure 4.

Tant que la durée écoulée depuis la fermeture de l'interrupteur **56** est inférieure à la durée *t(i,j)* programmée dans le compteur **142,** matérialisé par l'étape **92,** le signal « contrôle » de commande de l'interrupteur **56** connecté à la source **54** est maintenu à l'état haut au travers de la porte OR **63.** L'interrupteur **56** reste donc fermé et le courant *Iref* continue de circuler dans le bolomètre **12** correspondant.

Lorsque la durée écoulée depuis la fermeture de l'interrupteur 56 atteint la durée programmée *t(i,j)* du compteur **142,** la sortie de ce dernier bascule à zéro, à l'étape **94,** ce qui a pour effet d'ouvrir l'interrupteur **56** (la porte OR **63** confirme l'état bas car le signal « Start » est aussi à l'état bas) et donc de stopper l'injection de courant dans le bolomètre **12.** Les interrupteurs **53** des pixels **42** de la ligne en cours de correction sont alors ouverts par le changement d'état de la commande « Correction » qui intervient à l'étape **96**.

Conformément à l'invention, la durée t(i,j) est réglée sur la valeur selon la relation :

$$t(i,j) = \frac{k.TPF^2.C_{th}}{E_A.V_{ac}^2}.\Delta R_0(i,j) \qquad (5)$$

- $C_{th}$ est la capacité calorifique du bolomètre **12**;
- $TPF$ est la température absolue du plan focal ;
- $V_{ac}$ est la tension constante, aux bornes du bolomètre **12** qui est fixée par le transistor MOS **14** ; et
- $\Delta R_0(i,j)$ correspond à la valeur individuelle de la matrice $\Delta R_0$ relative au bolomètre **12** du pixel **42** auquel est connecté la circuiterie **52**.

Ainsi, lors du basculement de l'interrupteur **56** dans son état ouvert, et dans la mesure où à cet instant la condition $V_+ = Vref$ est remplie, la résistance du bolomètre a subi une variation $\Delta R$ égale à $\Delta R_0(i, j)$.

Plus particulièrement, on montre que la température d'un bolomètre **12** lorsqu'il est parcouru par un courant sous une tension constante $V_{ac}$ est modélisable selon la relation :

$$C_{th}.\frac{\partial\theta(t)}{\partial t} = -\frac{\theta(t)}{R_{th}} + Pir + \frac{V_{ac}^2}{R_{ac}(\theta(t))} \qquad (6)$$

où :

- $C_{th}$ est la capacité calorifique du bolomètre ;
- $R_{th}$ est la résistance thermique du bolomètre par rapport au substrat ;
- $Pir$ est la puissance du rayonnement infrarouge absorbée par le bolomètre ; et
- $\theta$ est la variation de température du bolomètre induit par le passage du courant dans celui-ci.

Par ailleurs, la relation (4) modélisant la relation entre la résistance d'un bolomètre et sa température conduit à l'expression :

$$R_{ac}(\theta(t)) = R_{abs}.exp\left(\frac{E_A}{k(TPF+\theta(t))}\right) \qquad (7)$$

Le système des équations (6) et (7) permet donc de modéliser l'évolution de la résistance d'un bolomètre en fonction du temps lorsque celui-ci est polarisé sous une tension constante. Si ce système d'équation est non linéaire et n'admet donc pas de solution analytique, il est toutefois simple à l'aide des solveurs informatiques de l'état de la technique de calculer une durée t(i, j) de polarisation, et donc d'échauffement, permettant d'obtenir une correction $\Delta R_0(i,j)$ de la résistance d'un bolomètre d'imagerie **12**.

En outre, sans faire appel à des solveurs d'équations différentielles non linéaires, on remarque que l'invention a pour vocation de compenser un écart relatif entre les valeurs extrêmes de la matrice $R_{ac}$ très faible, généralement proche de 2%, et cela pour des matériaux bolométriques dont le coefficient $TCR$ de variation relative de résistance en fonction de la température, ou « coefficient de résistance », est du même ordre, à savoir - 2%/K.

L'écart de température $\theta(i, j)$, correspondant à $\Delta R_0(i,j)$, à atteindre pour le bolomètre le plus résistif est par conséquent très faible et de l'ordre de un degré. Un tel échauffement est atteint en quelques microsecondes lorsque le bolomètre est soumis à un courant de l'ordre de celui usuellement utilisé pour la lecture du bolomètre. Cette durée est négligeable devant la constante de temps thermique du bolomètre, usuellement comprise entre 5 millisecondes et 15 millisecondes. Ainsi, le terme $-\dfrac{\theta(t)}{R_{th}}$ de la relation (6), qui exprime les pertes thermiques à l'équilibre, peut donc être négligé.

Par ailleurs, l'invention cherchant à imposer une variation de résistance à partir d'un point de référence où la température d'équilibre sous le rayonnement infrarouge incident est atteinte, le terme *Pir* n'intervient donc pas dans la durée d'échauffement du bolomètre.

Enfin, comme le terme $\theta$ dans la relation (6) est négligeable par rapport à la température absolue TPF, l'échauffement $\theta$ peut être modélisé en fonction du temps t selon la relation :

$$\theta = t.\frac{V_{ac}^2}{R_{ac}.C_{th}} \qquad (8)$$

En outre, le coefficient TCR s'exprime à partir de la relation (4) en fonction de la température T du bolomètre selon la relation :

$$TCR = \frac{1}{R_{ac}(T)}.\frac{dR_{ac}(T)}{dT} = -E_A / kT^2 \qquad (9)$$

Pour de petites variations de résistance $\Delta R$ de la résistance $R_{ac}$, que l'invention a pour but de compenser par de petites variations de température T égales à la variation de température $\theta$ que subissent les bolomètres par effet joule, on a $dt = \theta$, et la relation (9) se réécrit :

$$\theta = \frac{\Delta R}{R_{ac}.TCR} \qquad (10)$$

Or, la quantité $\Delta R_0$ d'un bolomètre définie à la relation (3) correspond à une quantité positive ($R_{ac}$-$R_{min}$) lorsque le coefficient TCR est négatif. La diminution de la quantité $\Delta R_0$ par un échauffement positif $\theta$ conduit ainsi à poser $\Delta R = -\Delta R_0$. Comme par ailleurs, on peut assimiler la grandeur T de la relation (9) à TPF, on peut admettre que $TCR = -E_A/(k.TPF^2)$, et l'équation (10) se réécrit donc selon la relation :

$$\theta = \frac{\Delta R_0}{R_{ac}}.\frac{k.TPF^2}{E_A} \qquad (11)$$

A l'aide des équations (8) et (11), il peut donc être déterminé les durées d'échauffement $t(i, j)$ à appliquer aux bolomètres 12 pour obtenir les corrections de résistance $\Delta R_0$ (i, j) selon la relation (5).

Un raisonnement analogue peut être mené pour des coefficients TCR positifs, la relation (5) restant valable.

Ainsi, la table $\Delta R_0$ des quantités individuelles de correction de résistance est remplacée par une table $\Delta T_0$ comportant les durées $t(i, j)$ d'échauffement à appliquer pour produire lesdites quantités. La phase de correction d'une ligne de la matrice **40** de pixels **12** consiste ainsi à charger les valeurs correspondantes de durées dans les compteurs de temps **142**, à fermer les interrupteurs **56** (les interrupteurs **16** restant ouverts et l'interrupteur **53** fermé) puis les ouvrir chacun après une durée $t(i, j)$ individualisée. La résistance de chacun des bolomètres **12** de la ligne est ainsi corrigée de leur quantité $\Delta R_0(i,j)$ correspondante.

La figure 4 représente particulièrement l'évolution temporelle des résistances la plus élevée ($R_{bolo}MAX$), la plus faible ($R_{bolo}MIN$) et une résistance quelconque intermédiaire $(R_{bolo}(i,j))$ d'une même ligne i en cours de correction. L'injection de courant s'arrête (la résistance ne diminue plus) dans chaque résistance à des instants définis par les

valeurs $\Delta R_0(i, j)$ respectives selon le principe énoncé. Le signal « Correction » contrôlé par le séquenceur **48** de manière préférentiellement ajustable est maintenu à l'état haut pendant une durée suffisante pour que la résistance la plus élevée (qui vaut $R_{bolo}MAX$ à l'instant zéro) ait le temps de varier de la quantité $\Delta R_0$ la plus élevée de la table $\Delta R_0(i,j)$. Dans le cas particulier choisi pour la clarté de l'exposé sur la figure 4, qui reproduit les conditions thermiques de la phase de calibration, toutes les résistances finissent leur évolution à l'étape **94** à la valeur $R_{min}$.

Le procédé se poursuit alors par la phase de lecture **82** au cours de laquelle les interrupteurs de remise à zéro **24** des circuiteries **46** de lecture sont fermés puis ré-ouverts en **98** (non représentée sur la figure 5A car opérée en parallèle à l'étape **80**) afin de décharger les condensateurs **24** des intégrateurs **18**, puis les interrupteurs de lecture **16** des pixels **12** de la ligne en cours de lecture sont fermés pendant l'étape **100** par activation de la commande « Select » pour la connexion des pixels **12** de la ligne aux circuiteries **46**, pendant une durée qui définit le temps d'intégration $Tint$ prédéterminé, comme cela a été expliqué précédemment.

Pendant l'espace de temps entre l'étape **94** et l'étape **100**, variable selon le bolomètre considéré, la température de ce dernier tend à retrouver sa valeur d'équilibre, à une vitesse limitée par la constante de temps thermique des bolomètres, Il en résulte une légère restauration de la dispersion naturelle de résistance, accompagnée typiquement d'une inversion de l'ordre de la distribution, comme indiqué sur la figure 4, sans effet adverse notoire compte tenu des espaces de temps très faibles considérés (quelques microsecondes).

L'étape **82** du procédé boucle alors sur l'étape **84** pour la correction des résistances et la lecture des bolomètres de la ligne suivante i+1 de la matrice **40**. En parallèle entre le début de l'étape **88** et le début de l'étape **100** de la ligne i+1, est effectuée l'opération d'échantillonnage - blocage (non représentées sur la figure 5A) des tensions $V_{out}$ de la ligne i. Le multiplexage du train de signaux vers l'amplificateur de sortie **49** peut s'étendre si nécessaire sur la phase d'intégration de la ligne i+1, comme cela est connu en soi.

La figure 4 illustre l'intérêt de positionner la valeur $R_{min}$ en dessous de l'ensemble des valeurs $R_{ac}(i,j)$. En procédant de la sorte, les valeurs de toutes les résistances sont modifiées avant le début de l'étape d'intégration au moyen de l'injection du courant $Iref$. Si la valeur $R_{min}$ est positionnée trop haut, une partie des bolomètres ne serait en effet pas affectée par le réglage de résistance, ce qui produirait une distorsion de l'image obtenue par défaut local de correction. Par contre, si cette valeur est positionnée nettement en dessous de la valeur minimale de la distribution, il faudra une durée inutilement longue pour obtenir l'uniformisation de toutes les résistances, ce qui ne présente que des inconvénients. Les espaces de temps non spécifiés sur la figure 4 sont définis sur des critères d'établissement nominal des signaux, comme cela est usuel dans le métier, sans autre contrainte particulière.

On a donc avant la lecture des bolomètres, une correction de leur résistance d'une quantité prédéterminée. A titre d'exemple numérique, la durée d'une correction de résistance est typiquement de l'ordre de 4 à 8 microsecondes pour appliquer un décalage de résistance par effet Joule de 2%. Plus généralement, la durée d'application du courant $Iref$ est de quelques microsecondes, durée qui est faible comparativement aux durées d'intégration $Tint$ usuelles, qui sont de quelques dizaines de microsecondes ou de la durée d'une trame de lecture usuellement égale à 16 millisecondes. On notera par ailleurs qu'il est possible de raccourcir la durée de la correction en appliquant un courant $Iref$ plus élevé, en réglant de manière appropriée la tension $V_{ac}$ aux bornes des bolomètres **12**, sans aucune modification des circuits et du fonctionnement décrits précédemment.

Comme indiqué, la figure 4 illustre la population des résistances des bolomètres d'imagerie **12** de la matrice **40** avant leur correction (histogramme « A ») et après la correction (histogramme « B ») dans le cas où les conditions thermiques sont représentatives de la phase de calibration. On notera ainsi que la dispersion des résistances des bolomètres **12** est sensiblement atténuée avant leur lecture par la correction selon l'invention. Ainsi, l'effet de la dispersion des offsets sur les images formées s'en retrouve sensiblement amoindrie et la dynamique résiduelle sensiblement augmentée.

Dans le cas général d'utilisation devant une scène quelconque, la distribution des résistances est définie par la puissance radiative absorbée par chaque bolomètre **12**. Il s'ensuit que l'histogramme « A » avant l'étape **80** de correction serait typiquement de forme différente, et surtout de largeur plus importante. Cependant l'étape de correction **80**, appliquée comme précédemment décrit, résulte en un histogramme « B » corrigé de l'incidence des variations dites naturelles des résistances, puisque chacune de ces résistances $R_{bolo}(i,j)$ aura vu à l'étape **94** sa valeur abaissée de la quantité $\Delta R_0(i,j)$ représentative de son offset individuel dans les conditions de référence. Les valeurs finales ne sont plus uniformément $R_{min}$, mais une valeur idéalement représentative uniquement de la scène.

De plus, dans la plupart des cas, la largeur de cet histogramme **« B »** avant l'étape d'intégration **100** est inférieure (de la largeur de l'amplitude des corrections) à celle de l'histogramme non corrigé « A », il en résulte un gain appréciable sur la dynamique de scène du détecteur.

En d'autres termes, il convient de noter que le décalage vers une résistance plus faible des résistances des bolomètres **12** ne détruit en rien l'information thermique issue de la scène contenue dans la valeur des résistances des bolomètres **12.** En effet, la correction des résistances des bolomètres **12** consiste en un simple décalage des résistances selon des quantités indépendantes de la valeur des résistances au moment de l'application de la correction. De ce fait la distribution des résistances liée à la distribution thermique de la scène est toujours présente dans les résistances après la phase de correction.

Cette correction s'apparente donc à une correction d'offset du type « 1 point » telle que décrite précédemment, c'est-à-dire s'apparente à la fermeture d'un obturateur mécanique suivie des corrections associées sur le niveau continu des tensions *Vout* en sortie des intégrateurs **18.** Cependant, contrairement à ce type de correction réalisée à l'aide d'une électronique et/ou d'un algorithme externes au circuit de lecture, la correction selon l'invention n'impose aucune limitation en termes de dynamique au signal en sortie du détecteur. Au contraire, en réduisant la dispersion des résistances, et ainsi la dispersion des courants de polarisation *Iac* circulant dans les bolomètres **12** lors de leur lecture, il est possible d'augmenter la dynamique résiduelle et/ou d'augmenter la tension de polarisation des bolomètres **12,** selon le choix de l'utilisateur.

On notera également que la correction selon l'invention a pour conséquence directe, sans qu'il soit nécessaire d'appliquer de calcul ou de traitement supplémentaire, de supprimer une grande partie des dispersions de sensibilité. La sensibilité est en effet inversement proportionnelle à la valeur de chaque résistance.

On notera par ailleurs, comme il est évident à partir de la figure 4, que le temps nécessaire pour obtenir la correction des résistances de tous les bolomètres **12** d'une ligne de la matrice **42** dépend des quantités de correction $\Delta R_0(i, j)$. Les valeurs $\Delta R_0(i,j)$ n'étant pas égales, la durée des corrections varie donc d'un bolomètre à l'autre. Par ailleurs, les bolomètres d'une ligne sont lus nécessairement de manière synchrone. Par conséquent, la durée de la phase de correction **80** doit être choisie à la fois pour que toutes les corrections des résistances des bolomètres d'une même ligne soient effectives et que la phase de lecture **82** de cette ligne débute sans attendre inconsidérément après la fin de la phase de correction **80.** Il convient en effet que la phase de lecture **82,** et plus particulièrement l'étape d'intégration de celle-ci, soit menée au plus près des corrections des résistances de manière à éviter la restauration de la dispersion des résistances des bolomètres caractéristique de l'équilibre thermique du détecteur. Une telle restauration est en effet produite par un effet de relaxation naturelle liée à la constante de temps thermique des bolomètres, comme déjà signalé et illustré par la figure 4.

Il peut donc exister de manière générale un léger décalage temporel entre la fin d'une correction particulière d'un bolomètre **12,** dont la durée est inférieure à celle de la phase de correction **82,** et le début de la phase d'intégration **100** intervenant sur celui-ci. Ce décalage n'est toutefois pas critique dans la mesure où il reste très inférieur au temps des trames de lecture, usuellement de 16 millisecondes, et la constante de temps thermique des bolomètres, classiquement comprise entre 5 millisecondes et 15 millisecondes.

Le mode de réalisation venant d'être décrit peut être avantageusement associé à un fonctionnement tel que l'étape **94** correspondant à la fin de l'injection de courant soit simultanée pour tous les circuits **52.** Ce fonctionnement est obtenu par la fermeture de l'interrupteur **56** de chaque circuit **52** après un temps d'attente correspondant au complément du temps *t(i, j)* par rapport au temps *t(i, j)MAX* correspondant au bolomètre initialement le plus résistif de la table $\Delta T_0$.

La figure 6 illustre une variante du circuit de commande **52** qui produit ce résultat, en relation avec le chronogramme de la figure 5B. Sur la figure 5B, seuls les signaux « Contrôle($R_{bolo}$ MIN) », « Contrôle($R_{bolo}$ MAX) » et « Contrôle ($R_{bolo}$ (i,j)) » sont représentés, les signaux « Start », « Correction » et « Select » étant identiques à ceux de la figure 5A.

Sur la figure 6, la cellule OR en oeuvre sur la figure 2 est remplacée par une cellule NOR et la polarité de la sortie du compteur **142** est inversée. En outre, la table $\Delta T_0$ utilisée pour pré-charger les compteurs **142** est remplacée par la table complémentaire $C\Delta T_0$ dont chaque élément est égal à *[t(i,j)MAX - t(i,j)].* Comme précédemment, le signal « Start » initie le décompte des temps individuels de chaque compteur **142,** qui ferme l'interrupteur **56** associé lorsque le temps complémentaire *Ct(i,j)* est écoulé. La fermeture de l'interrupteur **53** (signal « Correction » à l'état bas) marque la fin de l'injection de courant et de l'étape de correction **80** pour tous les bolomètres d'une même ligne i au même instant.

Ainsi, tous les bolomètres voient le même temps de retour vers l'équilibre thermique avant le début de la phase **100,** lequel temps est avantageusement ajustable à une très faible valeur. Les fréquences d'horloge habituelles de l'ordre de 10MHz permettent un incrément unitaire de temps de l'ordre de 50 à 100ns, largement assez précis pour une réalisation efficace de l'invention selon ce troisième mode.

Il a été décrit des modes de réalisation s'appliquant à des bolomètres, dont le matériau bolométrique présente une résistance qui diminue à mesure que sa température augmente, c'est-à-dire un matériau bolométrique à coefficient de résistance négatif, comme par exemple un matériau semi-conducteur comprenant du silicium amorphe (a-Si) ou un oxyde de vanadium (VOx).

L'invention s'applique également aux matériaux bolométriques à coefficient de résistance positifs, c'est-à-dire des matériaux dont la résistance augmente à mesure que leur température augmente, tels que les métaux, notamment du titane.

Dans cette application, la correction selon l'invention consiste à augmenter la résistance de chaque bolomètre, et non pas la diminuer tel que cela a été décrit ci-dessus, de façon à obtenir une distribution essentiellement resserrée autour la résistance $R_{max}$ de la matrice $R_{ac}$ de résistance obtenues lors de la phase de calibration.

Il a également été décrit des modes de réalisation de l'invention s'appliquant à des détecteurs bolométriques régulés en température.

L'invention s'applique cependant également à des détecteurs non régulés, plus communément désignés sous l'expression anglo-saxonne de « *TEC-less* ».

Dans une première variante d'une telle application, les quantités de correction $\Delta R_0(i, j)$, sont réglées au début de la phase de correction en fonction de la température du plan focal, mesurée par un capteur agencé au niveau du substrat, comme par exemple une sonde à semi-conducteur formée directement dans la circuiterie de lecture. Par exemple, lors de la phase de calibration du détecteur, une pluralité de matrices de correction $\Delta R_0$, respectivement de durée $\Delta T_0$, est acquise en fonction de plusieurs températures *TPF* du plan focal et mémorisée dans le détecteur. Lors de l'utilisation de celui-ci, une matrice particulière parmi celles mémorisées est sélectionnée, ou bien interpolée, en fonction de la température mesurée $TPF_{mes}$ du plan focal. Cette variante oblige cependant à l'acquisition de plusieurs matrices de référence, ce qui s'avère être un processus très long et donc coûteux.

Dans une variante privilégiée, une unique matrice de référence *Rac* est acquise lors de la phase de calibration du détecteur. Comme par ailleurs, il est connu un modèle de variation de la résistance des bolomètres en fonction de la température, par exemple selon la relation (7), une matrice de résistances $Rac_{TPFmes}$ est calculée régulièrement et/ou périodiquement lors de l'utilisation du détecteur en fonction de la température mesurée $TPF_{mes}$ du plan focal et de la matrice de référence $R_{ac}$. En utilisant la relation (7), les valeurs individuelles $Rac_{TPFmes}(i,j)$ sont alors calculées selon la relation :

$$Rac_{TPF_{mes}}(i, j) = R_{ac}(i, j).exp\left(\frac{E_A}{k.TPF} - \frac{E_A}{k.TPF_{mes}}\right) \quad (12)$$

Une fois la matrice $Rac_{TPFmes}$ calculée, la matrice de correction $\Delta R_0$ est déterminée puis les durées $t(i, j)$ d'échauffement correspondantes, comme cela été décrit précédemment.

L'utilisation d'un modèle de la résistance des bolomètres en fonction de la température permet ainsi de s'affranchir de l'acquisition d'une pluralité de matrices de résistance.

Par ailleurs, pour améliorer encore la précision de la correction selon l'invention en diminuant la dispersion des résistances corrigées, la dispersion spatiale de la température du plan focal peut également être prise en compte en utilisant plusieurs capteurs de température sur le plan focal. Une modélisation spatiale de la température du plan focal est alors mise en oeuvre en fonction des mesures de température afin de déterminer la température du substrat au niveau de chaque bolomètre d'imagerie. La quantité de correction de la résistance d'un bolomètre est alors calculée en fonction de la température correspondante du substrat.

**Revendications**

1.  Dispositif de détection d'un rayonnement infrarouge, comprenant

    ■ une matrice (42) de bolomètres (12) pour la détection dudit rayonnement comprenant chacun une membrane bolométrique comportant un matériau sensible de type semi-conducteur suspendue au dessus d'un substrat ; et
    ■ pour la lecture de chaque bolomètre (12), une circuiterie (14, 46) de formation de signal comportant :

       o une circuiterie (14) de polarisation de lecture apte à polariser le bolomètre sous une tension prédéterminé afin de faire circuler du courant dans celui-ci ;
       o une circuiterie (20) de rejection de mode commun apte à produire un courant de mode commun ; et
       o une circuiterie (18) d'intégration apte à intégrer la différence entre le courant circulant dans le bolomètre et le courant de mode commun,

    *caractérisé* :

       ■ **en ce qu'**il comprend une circuiterie (52) de correction de la résistance des bolomètres apte à injecter du courant dans chaque bolomètre pour décaler sa résistance d'une quantité prédéterminée dépendante de son offset, l'injection de courant étant réalisée préalablement à la polarisation de lecture du bolomètre et le décalage étant réalisé conformément au sens de variation de la résistance du bolomètre en fonction de la température, la circuiterie de correction (52) étant apte à décaler les résistances des bolomètres (12) vers une valeur commune ;
       ■ **en ce que** la circuiterie de correction (52) comprend des moyens (142) de chronométrage, aptes à stopper l'injection de courant après une durée déterminée en fonction de la quantité dépendante de l'offset ; et
■ **en ce que** les moyens (142) de chronométrage sont aptes à stopper l'injection de courant après une durée selon la relation :

$$t(i, j) = \frac{k.TPF^2.C_{th}}{E_A.V_{ac}^2}.\Delta R_0(i, j)$$

où $t(i, j)$ est la durée prédéterminée, $\Delta R_0(i, j)$ est la quantité dépendante de l'offset, k est la constante de Boltzmann, TPF est la température du substrat, $C_{th}$ est la capacité calorifique du bolomètre, $E_A$ est l'énergie d'activation thermique de conductivité du matériau bolométrique constitutif du bolomètre, et $V_{ac}$ est la tension aux bornes du bolomètre.

2. Dispositif de détection d'un rayonnement infrarouge selon la revendication 1, *caractérisé* **en ce que** la matrice (42) de bolomètres est lue ligne par ligne, et **en ce que** la circuiterie de correction (52) comprenant une circuiterie de commande de résistance est agencée en bout de chaque colonne de la matrice (42) de bolomètres (12) et est apte à être connectée à chaque bolomètre (12) de la colonne pour commander la résistance de celui-ci.

3. Procédé de détection d'un rayonnement infrarouge à l'aide d'une matrice de bolomètres, le procédé comportant, pour la lecture d'un bolomètre :

■ la polarisation des bolomètres sous une tension prédéterminée afin de faire circuler du courant dans ceux-ci ;
■ la soustraction d'un courant de mode commun du courant circulant dans les bolomètres ; et
■ l'intégration de la différence entre le courant circulant dans les bolomètres et le courant de mode commun,

*caractérisé* **:**

■ **en ce qu'**il comporte, préalablement à la lecture des bolomètres, l'injection d'un courant dans les bolomètres de manière à décaler la résistance desdits bolomètres d'une quantité prédéterminée dépendante de l'offset de ceux-ci conformément au sens de variation de la résistance des bolomètres en fonction de la température, et de manière à régler la résistance des bolomètres sur une valeur commune ;
■ et **en ce que** l'injection du courant dans chaque bolomètre est appliquée pendant une durée selon la relation :

$$t(i, j) = \frac{k.TPF^2.C_{th}}{E_A.V_{ac}^2}.\Delta R_0(i, j)$$

où $t(i, j)$ est la durée prédéterminée, $\Delta R_0(i, j)$ est la quantité dépendante de l'offset du bolomètre, $k$ est la constante de Boltzmann, TPF est la température du substrat, $C_{th}$ est la capacité calorifique du bolomètre, $E_A$ est l'énergie d'activation thermique de conductivité du matériau bolométrique constitutif du bolomètre, et $V_{ac}$ est la tension de polarisation aux bornes du bolomètre.

4. Procédé selon la revendication 3, *caractérisé* **en ce que** les valeurs prédéterminées dépendantes des offsets associées aux bolomètres sont déterminées :

■ en exposant la matrice à une scène uniforme ;
■ en déterminant les résistances correspondantes des bolomètres ; et
■ en retranchant desdites résistances :

○ une quantité sensiblement égale à la plus petite des résistances déterminées dans le cas de bolomètres à coefficient de résistance négatif ; ou
○ en retranchant desdites résistances une quantité sensiblement égale à la plus grande des résistances déterminées dans le cas de bolomètres à coefficient de résistance négatif.

# Fig. 1

(Etat de la technique)

Fig. 2

Calibration

-72-

-74-

-76-

-78-

70

Correction

-84-

-86-

-88-

-92-

-94-

-96-

80

Lecture

-98-

-100-

82

**Fig. 3**

**Fig. 4**

**Fig. 5A**

**Fig. 5B**

**Fig. 6**

Europäisches
Patentamt

European
Patent Office

Office européen
des brevets

**RAPPORT DE RECHERCHE EUROPEENNE**

Numéro de la demande

EP 11 18 4097

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2010/125281 A1 (ULIS [FR]; DUPONT BENOIT [BE]; VILAIN MICHEL [FR]) 4 novembre 2010 (2010-11-04) * revendications 1-3,10-12; figures 2,9A * ----- | 1-4 | INV. G01J1/44 G01J1/46 G01J5/22 G01J5/24 |
| X | US 2009/152465 A1 (DUPONT BENOIT [BE] ET AL) 18 juin 2009 (2009-06-18) * alinéa [0118] – alinéa [0133]; figure 2 * ----- | 1-4 | |

DOMAINES TECHNIQUES RECHERCHES (IPC)

G01J

Le présent rapport a été établi pour toutes les revendications

| Lieu de la recherche | Date d'achèvement de la recherche | Examinateur |
|---|---|---|
| Munich | 6 mars 2012 | Rödig, Christoph |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

......................................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 18 4097

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-03-2012

| Document brevet cité au rapport de recherche | Date de publication | Membre(s) de la famille de brevet(s) | Date de publication |
|---|---|---|---|
| WO 2010125281 A1 | 04-11-2010 | CA 2760468 A1<br>EP 2425220 A1<br>FR 2945120 A1<br>US 2012037805 A1<br>WO 2010125281 A1 | 04-11-2010<br>07-03-2012<br>05-11-2010<br>16-02-2012<br>04-11-2010 |
| US 2009152465 A1 | 18-06-2009 | CA 2647370 A1<br>CN 101458124 A<br>EP 2071309 A1<br>FR 2925159 A1<br>JP 2009145330 A<br>RU 2008147122 A<br>US 2009152465 A1 | 12-06-2009<br>17-06-2009<br>17-06-2009<br>19-06-2009<br>02-07-2009<br>10-06-2010<br>18-06-2009 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- US 20020022938 A

- WO 9847102 A

**Littérature non-brevet citée dans la description**

- **DE E. MOTTIN et al.** Uncooled amorphous silicon enhancement for $25\mu$m pixel pitch achievement. *Infrared Technology and Application XXVIII, SPIE,* vol. 4820